# EUROPEAN PATENT APPLICATION

(11) **EP 2 557 695 A1**
(43) Date of publication of application: **13.02.2013**
(21) Application number: 11306022.2
(22) Date of filing: 08.08.2011
(51) Int. Cl.: H04B 1/38, H04B 1/034

(54) **Wearable item**

(71) Applicant: Alcatel Lucent, 75007 Paris (FR)
(72) Inventor: Heinz, Klaus, 10779 Berlin (DE)
(74) Representative: Wetzel, Emmanuelle

(57) **Abstract**

A wearable item comprising a wireless transmitter adapted to communicate to a mobile device.

## Description

### Background

This section introduces aspects that may be helpful in facilitating a better understanding of the invention. Accordingly, the statements of this section are to be read in this light and are not to be understood as admissions about what is in the prior art or what is not in the prior art.

A known mobile emergency device is configured to receive an emergency signal from a band worn around the wrist or neck.

### Summary

The present invention was made in view of the prior art described above, and the object of some embodiments is to provide a mobile device that integrates both triggering an emergency call either from the device itself through an emergency button, or through an RF device, wristband or necklace, and the normal PDA functionality as for example an application for vital data monitoring, a service portal and anything else a PDA has to offer.

According to an embodiment a wearable item is provided comprising a wireless transmitter adapted to communicate to a mobile device.

### Description of the Embodiments

Hereinafter, the best mode for carrying out a method according to an embodiment is described in detail.

The basic idea is to embed an 869 MHz radio module into a tablet PC and build an emergency button into a tablet PC. To combine optionally the emergency call with a GPS location service.

A newly designed wristband with an embedded micro controller chip that reacts on the emergency button sends the emergency call information to the tablet PC. The tablet PC initiates the emergency call to the caregiver using 3G mobile telephone technology.

Since in the European Union the frequency channel between 869.200 MHz and 869.250 MHz is reserved for emergency calls, the radio technology has to serve the constraints of this technology. This means micro controller chips have to be used on both sides, wristband and tablet PC, that support this radio technology. A receiver radio module has to be embedded into the tablet PC and has to work together with the existing hard- and software of the tablet PC. The tablet has an emergency button built in that also initiates an emergency call to the caregiver.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wearable item comprising a wireless transmitter adapted to communicate to a mobile device.

2. Item as in claim 1 taking the form of either of the following: a wristband and a neckband.

3. Item as in claim 1 or 2 wherein the transmitter is configured to communicate to at least one of the following: a Smartphone, a tablet computer, and a personal digital assistant.

4. Item as in any of the preceding claims comprising an emergency button for triggering an emergency call.

5. Item as in any of the preceding claims wherein the transmitter operates at radio frequency.

6. Item as in claim 5 wherein the transmitter operates at a frequency of approximately 869 MHz.

7. Item as in any of the preceding claims further comprising a physiological sensor.

8. Item as in claim 7 wherein the sensor is embedded in a smart fabric.

9. A method of reporting an emergency comprising transmitting tirelessly an emergency signal from a wearable item to a mobile device.

10. Method as in claim 9 comprising monitoring a vital sign of a wearer of the item and transmitting the vital sign from the item to the device.

11. Method as in claim 9 or 10 comprising localizing the wearer by means of a geospatial positioning system.

12. Method as in any of claims 9 to 11 comprising requesting a concierge service.

13. Method as in any of claims 9 to 12 comprising establishing at least one of the following: a video transmission from the device and an audio transmission from the device.

14. Method as in any of claims 9 to 13 comprising forwarding the emergency call by means of a cellular netvwork.

15. Method as in claim 14 comprising connecting the device to at least one of the following: a telemedicine center and a telecare service.
